# EUROPÄISCHE PATENTSCHRIFT

(11) **EP 4 315 285 B1**
(45) Veröffentlichungstag und Bekanntmachung des Hinweises auf die Patenterteilung: **27.05.2026**
(21) Anmeldenummer: 21839047.4
(22) Anmeldetag: 09.12.2021
(51) Int. Cl.: G07C 5/08, G05B 23/02, G01M 17/007

(54) **VERFAHREN UND FAHRZEUGSYSTEM ZUM BESTIMMEN EINES ZUSTANDS DER KOMPONENTEN EINES FAHRWERKS**
METHOD AND VEHICLE SYSTEM FOR DETERMINING THE STATE OF THE COMPONENTS OF A CHASSIS
PROCÉDÉ ET SYSTÈME DE VÉHICULE PERMETTANT DE DÉTERMINER L'ÉTAT DES COMPOSANTS D'UN CHÂSSIS

(30) Priorität: 31.03.2021 DE 102021203266
(43) Veröffentlichungstag der Anmeldung: 07.02.2024
(73) Patentinhaber: ZF Friedrichshafen AG, 88046 Friedrichshafen (DE)
(72) Erfinder: PAPE, Dennis, 49179 Ostercappeln (DE); POBANDT, Tobias, 49074 Osnabrück (DE)
(74) Vertreter: ZF Friedrichshafen AG
(86) Internationale Anmeldenummer: PCT/EP2021/084997
(87) Internationale Veröffentlichungsnummer: WO 2022/207134

(56) Entgegenhaltungen:
- DE-A1- 10 235 525
- DE-A1- 102014 006 322
- DE-A1- 102018 119 652
- US-A1- 2016 078 690

## Beschreibung

Die Erfindung betrifft ein Verfahren und ein Fahrzeugsystem zum Bestimmen eines Zustands der Komponenten eines individuellen Fahrwerks eines individuellen Fahrzeugs. Ferner betrifft die Erfindung ein Fahrzeug.

Ein Fahrzeug weist üblicherweise bordeigene Fahrzeugdiagnosesysteme auf, die Fahrzeugkomponenten und -systeme beispielsweise zum Zwecke einer turnusmäßigen Inspektion überwachen. Dazu vergleichen die Systeme Fahrzeugdaten wie den Kilometerstand. Ferner weisen Fahrzeugdiagnosesysteme Sensoren zur Überwachung auf, welche Störungen des Betriebs des Fahrzeugs oder einer Komponente melden. Solche Fahrzeugdiagnosesysteme melden jedoch nur, wenn ein Parameter außerhalb eines akzeptablen Bereichs liegt.

Eine Möglichkeit, eine mögliche Störungsbedingung oder einen möglichen Ausfall durch beispielsweise Verschleiß vorherzusagen, existiert bisher nicht.

Ein Verschleiß von Komponenten kann jedoch zu ernsthaften Problemen hinsichtlich der Zuverlässigkeit von Komponenten und der komplexeren Systeme führen, in die sie integriert sind. Tatsächlich kann ein übermäßiger Verschleiß einer Basiskomponente die gesamte Baugruppe, in die sie integriert ist, beschädigen. Darüber hinaus kann übermäßiger Verschleiß beispielsweise von Bremsbelägen zu gefährlichen Schäden an der Bremsbaugruppe führen und dadurch die Sicherheit des Fahrzeugs beeinträchtigen.

Die DE 10 2018 119652 A1 offenbart ein Fahrzeug, aufweisend ein Fahrwerk mit zumindest einer Fahrwerkskomponente und ein Fahrerassistenzsystem zur Erfassung eines Zustandes der Fahrwerkskomponente, wobei das Fahrerassistenzsystem eine Auswertungseinheit und einen ersten akustischen Sensor aufweist, der einen von der Fahrwerkskomponente im fahrenden Betrieb des Fahrzeugs erzeugten Schall erfasst und in ein elektrisches Signal umwandelt, und die Auswertungseinheit mithilfe des elektrischen Signals zumindest eine Information über den Zustand der Fahrwerkskomponente ermittelt.

Aus der DE 102 35 525 A1 ist ein Verfahren zum Bestimmen eines Zustands der Komponenten eines individuellen Fahrwerks eines individuellen Fahrzeugs bekannt, wobei ein erster Datensatz von Fahrzeugdaten bereitgestellt wird, welcher zumindest Belastungs- und /oder Verschleißdaten eines gleichen oder ähnlichen Fahrwerktyps des individuellen Fahrzeuges über die gesamte Lebensdauer umfasst. Hierbei wird ein Vergleich der aktuell gemessenen Fahrzeugdaten mit dem ersten Datensatz zur Bestimmung des Zustands durchgeführt.

Die DE 10 2014 006322 A1 offenbart ein System zur Analyse einer Energieeffizienz eines Fahrzeugs mit verschiedenen Sensoren, die jeweils einen Datensatz erfassen, wobei einer der Datensätze einen Fahrzustand charakterisiert und dieser Datensatz mittels einer Vergleichseinrichtung mit vordefinierten Parameterbereichen verglichen wird.

Ein weiteres Dokument zum Stand der Technik, US2016/078690A1, offenbart ein Verfahren zur Überwachung des Gesundheitszustands eines Fahrzeugsystems.

Es ist daher eine Aufgabe der Erfindung ein Verfahren und ein Fahrzeugsystem anzugeben, bei welchem der Zustand des Fahrwerks genauer bestimmt werden kann, um so beispielsweise die Fahrsicherheit zu erhöhen. Ferner ist es eine Aufgabe ein Fahrzeug anzugeben.

Diese Aufgabe wird durch ein Verfahren mit den Merkmalen des Anspruches 1 und mit einem Fahrzeugsystem mit den Merkmalen des Anspruches 8 und ein Fahrzeug mit den Merkmalen des Anspruches 12 gelöst.

Vorteilhafte Weiterbildungen, welche einzeln oder in Kombination miteinander eingesetzt werden können, sind in den abhängigen Ansprüchen sowie in der Beschreibung angegeben.

Die Aufgabe wird gelöst durch ein Verfahren zum Bestimmen eines Zustands der Komponenten eines individuellen Fahrwerks eines individuellen Fahrzeugs, umfassend der Schritte:
- Bereitstellen eines ersten Datensatzes von Fahrzeugdaten, welcher zumindest Belastungs- und Verschleißdaten eines gleichen oder ähnlichen Fahrwerktyps des individuellen Fahrzeuges über die gesamte Lebensdauer umfasst,
- Erzeugen eines individuellen zweiten Datensatzes in einem individuellen Fahrzeug durch Erfassung von Fahrzeugdaten als Sollzustand bis zu einem vorab definierten ersten Kilometerstand und/oder einem festgelegten Alter des individuellen Fahrzeugs,
- Erfassen von aktuell gemessenen Fahrzeugdaten ab einem vorab definierten zweiten Kilometerstand und/oder einem festgelegten Alter des individuellen Fahrzeugs, hierbei liegt das Alter und der zweite Kilometerstand nach dem ersten Kilometerstand,
- Durchführen eines Vergleichs der aktuell gemessenen Fahrzeugdaten mit dem ersten Datensatz als auch dem zweiten Datensatz zur Bestimmung des Zustands, wobei
- ein Ist-Zustand anhand eines Vergleiches zwischen den aktuell gemessenen Fahrzeugdaten und dem ersten Datensatz vorgenommen wird, und ein Soll-Zustand anhand eines Vergleiches zwischen den aktuell gemessenen Fahrzeugdaten und dem zweiten Datensatz vorgenommen wird und der aktuelle Verschleiß der Komponenten des Fahrwerkes anhand eines Soll-Ist-Vergleiches bestimmt wird.

Als Fahrwerk können vorzugsweise die beiden Achsen des Fahrzeugs als auch deren Komponenten als auch lediglich eine Achse als auch deren Komponenten verstanden werden.

Erfindungsgemäß wurde erkannt, dass zur derzeitigen Beurteilung des Zustands eines Fahrwerks derzeit vor allem aktuell erfasste Daten von Beschleunigungssensoren genutzt werden. Hierbei werden Veränderungen im Schwingungsverhalten analysiert. Bisherige Untersuchungen brachten bisher jedoch keinen eineindeutigen Indikator hervor, um den Verschleiß des Fahrwerks genau zu beurteilen. Der Austausch von verschlissenen und neuen Fahrwerkskomponenten lassen die möglichen Kombinationen nahezu unendlich anwachsen.

Findet jedoch eine fehlerhafte Beurteilung statt, so kann eine Gefährdung der Fahrsicherheit vorliegen, insbesondere wenn relevante Bauteilkomponenten wie Radaufhängung/Bremsen etc. direkt oder indirekt betroffen sind.

Die Erfindung hat hierzu erkannt, dass es nicht auslangt, eine Verschleißaussage /Aussage über den Zustand alleine auf Basis der aktuell erfassten Daten zu treffen. Erfindungsgemäß wird ein erster Datensatz von Fahrzeugdaten, welcher zumindest die Belastungs- und /oder Verschleißdaten eines gleichen oder ähnlichen Fahrwerktyps des individuellen Fahrzeuges über die gesamte Lebensdauer umfasst, bereitgestellt. Dieser kann auf dem Prüffeld ermittelt werden.

Der erste Datensatz wird in einem Fahrzeug mit einem ähnlichen oder gleichen Fahrwerk bereitgestellt.

Erfindungsgemäß wurde weiter erkannt, dass ein individuelles Anlernen des individuell ausgestatteten Fahrzeugs notwendig ist, um einen Soll-Zustand festzulegen. Fährt das Fahrzeug daher als Neuwagen vom Band, wird ein Anlernen des Soll-Zustands durch Erfassung der Fahrzeugdaten vorgenommen. Dieser Anlernvorgang bleibt für eine gewisse Zeit und/oder eine Anzahl an gefahrener Kilometer aktiv. Hierbei wird ein zweiter Datensatz erzeugt, beispielsweise aus erfassten Schwingungen. Dabei wurde erfindungsgemäß erkannt, dass der Soll-Zustand nicht nur generisch, sondern anhand des individuellen Fahrzeugs erfasst werden muss, da eine Vielzahl von individuellen Ausstattungen jeweils andere Soll -Datensätze erzeugen. Anschließend werden die aktuellen Fahrzeugdaten ab einem vorab definierten zweiten Kilometerstand und/oder einem festgelegten Alter des individuellen Fahrzeugs gemessen bzw. erfasst. Der zweite Kilometerstand kann dabei beispielsweise kurz nach dem ersten Kilometerstand liegen.

Weiterhin anschließend wird erfindungsgemäß ein Vergleich anhand der aktuell gemessenen Fahrzeugdaten mit dem ersten Datensatz als auch mit dem zweiten Datensatz durchgeführt. D.h. es werden erfindungsgemäß quasi die aktuellen Fahrzeugdaten mit den Soll-Daten bzw. Soll-Zustand verglichen, als auch die aktuellen Fahrzeugdaten mit dem ersten Datensatz als Ist-Zustand während eines Lebensdauerzyklus.

Dieser Vergleich zwischen Ist-Zustand während des Lebensdauerzyklus und individuell erzeugten Soll-Zustand erzeugt einen Zustandswert, an dem eine Aussage über den tatsächlichen Zustand eines Fahrwerks sicher bewerkstelligt werden kann. So kann beispielsweise am Lebensdauerzyklusende die Aussage Vollverschlissen anhand vor allem des ersten Datensatzes unter Zuhilfenahme des zweiten Datensatzes sicherer erzeugt werden. Ferner können durch den Abgleich mit den beiden Datensätzen Aussagen wie "zu 80% vollverschlissen" oder zu "20% dem Neuzustand entsprechend" getroffen werden.

Durch die Erfindung kann eine eindeutige und sichere Beurteilung bzgl. des Fahrwerkszustandes getroffen werden indem quasi sowohl der Neuzustand des individuellen Fahrzeugs als Ausgangsbasis als auch Informationen über den gesamten Lebensdauerzyklus eines ähnlichen oder gleichen Fahrwerks genutzt werden.

Es findet sowohl eine Beurteilung über die Entfernung von diesem Neuzustand statt als auch der Vergleich mit dem ersten Datensatz als repräsentativer Lebensdauerzyklus. Dadurch kann eine sichere Aussage zum Zustand erfolgen.

In weiterer Ausgestaltung wird der zweite Datensatz, durch Unterteilen der als Sollzustand erfassten Fahrzeugdaten in einem die Straßenoberfläche repräsentierenden Straßenoberflächencluster oder Anlegen eines neuen Straßenoberflächenclusters bei bislang unbekannter Straßenoberfläche und Unterteilen der als Sollzustand erfassten Fahrzeugdaten in dem neu angelegten Straßenoberflächencluster erzeugt. Um einen verbesserten Abgleich bzw. Vergleich zu erzielen, wird vorzugsweise ein Clustering der Straßenoberfläche durchgeführt. Ist die Straßenoberfläche noch nicht erfasst, so wird ein neues Cluster angelegt und mit den aufgenommenen Fahrzeugdaten als zweiter Datensatz gespeichert. Dadurch kann ein verbesserter zweiter Datensatz angelernt und später somit der Zustand des Fahrwerks genauer ermittelt werden.

In weiterer bevorzugter Ausgestaltung wird der erste Datensatz durch einen auf einem Prüfstand in einem Langläufertest getesteten identischen oder ähnlichen Fahrwerktyp als generisch erzeugter Referenzdatensatz bereitgestellt.

Durch einen auf einem Prüfstand durchgeführten Langläufertest kann der erste Datensatz einfach bestimmt werden. Es ist durch diesen Prüfstand einfach möglich, bestimmte Frequenzbereiche zu identifizieren, d.h. beispielsweise Footsprints zu erzeugen, die für einen späteren Vergleich herangezogen werden können.

Vorzugsweise kann ein solcher erster Datensatz durch eine rein analytische Vorgehensweise als auch durch ein künstliches neuronales Netz oder ein anderes maschinelles Lernverfahren erzeugt werden. Das Erzeugen des ersten Datensatzes auf einem Prüfstand bietet ferner den Vorteil, dass Bauteilkomponenten getauscht werden können. So können beispielsweise Bremsbeläge regelmäßig getauscht werden, welche anschließend mit den bereits älteren, zum Teil verschlissenen umliegenden Bauteilkomponenten andere Schwingungen/Frequenzen erzeugen. Dadurch kann der erste Datensatz erweitert, als auch verbessert werden, wodurch sich bei einem späteren Vergleich der aktuelle Fahrwerkszustand des individuellen Fahrzeugs besser bestimmen lässt.

In weiterer Ausbildung wird der Referenzdatensatz für jeden der beiden Achsen separat erzeugt. Dadurch kann ein gezielterer Vergleich zwischen den vorderen am Fahrzeug aufgenommenen aktuellen Fahrzeugdaten und den hinterem am Fahrzeug aufgenommenen aktuellen Fahrzeugdaten bewerkstelligt werden.

In weiterer Ausführungsform werden als aktuell gemessene Fahrzeugdaten sowie als zweiter Datensatz zumindest die Schwingungsamplituden der Fahrzeugbewegungen bei charakteristischen Straßenoberflächen verwendet. Dadurch können die bestimmten Frequenzbereiche über erkannte Straßenoberflächen erzeugt und zugeordnet werden.

Erfindungsgemäß wird ein Ist-Zustand anhand eines Vergleiches zwischen den aktuell gemessenen Fahrzeugdaten und dem ersten Datensatz, und ein Soll-Zustand anhand eines Vergleiches zwischen den aktuell gemessenen Fahrzeugdaten und dem zweiten Datensatz vorgenommen, wobei der aktuelle Verschleiß der Komponenten des Fahrwerkes anhand eines Soll-Ist-Vergleiches bestimmt wird. Dabei können die Vergleiche zwischen den Datensätzen und den aktuell gemessenen Fahrzeugdaten auch unterschiedlich gewichtet werden. Somit kann der aktuelle Verschleiß des Fahrwerks bzw. dessen Komponenten ermittelt werden. Durch den Vergleich werden die Daten mit einem Datensatz abgeglichen, welcher den Lebenszyklus mit entsprechendem Verschleiß charakterisiert, als auch einem Datensatz, welcher den Neuzustand darstellt. Dadurch kann eine gesicherte Beurteilung über den Zustand des Fahrwerks erfolgen.

Gemäß einer weiteren Weiterbildung werden die aktuellen Fahrzeugdaten kontinuierlich oder adaptiv durch das Fahrzeug gemessen. Dabei kann adaptiv beispielsweise anhand des Alters des Fahrzeugs oder anhand der Kilometeranzahl vorgenommen werden oder bei Auftreten bestimmter Situationen.

Ferner können die aktuell gemessenen Fahrzeugdaten die gefahrenen Kilometer und/oder das Alter des Fahrzeugs umfassen. Dadurch kann die Plausibilität des Vergleichs bzw. des Ergebnisses überprüft werden. Die gefahrenen Kilometer können beispielsweise repräsentativ für gemittelte Lastkollektive und das Alter für die Alterung von z.B. Gummilager genutzt werden.

Ferner wird die Aufgabe gelöst durch ein Fahrzeugsystem zum Bestimmen eines Zustands der Komponenten eines individuellen Fahrwerks eines individuellen Fahrzeugs umfassend:
- eine Speichereinheit zum Bereitstellen eines ersten Datensatzes von Fahrzeugdaten, wobei der erste Datensatz zumindest die Belastungs- und Verschleißdaten eines gleichen oder ähnlichen Fahrwerktyps des individuellen Fahrzeuges über die gesamte Lebensdauer umfasst,
- die Speichereinheit zum Bereitstellen eines individuellen zweiten Datensatzes in einem individuellen Fahrzeug, wobei der individuelle zweite Datensatz gemessene Fahrzeugdaten als Sollzustand bis zu einem vorab definierten ersten Kilometerstand und/oder einem festgelegten Alter des individuellen Fahrzeugs durch die ein oder mehreren Sensoren umfasst,

- ein Sensorsystem zum Erfassen von aktuell gemessenen Fahrzeugdaten ab einem vorab definierten zweiten Kilometerstand und/oder einem festgelegten Alter des individuellen Fahrzeugs, hierbei liegt das Alter und der zweite Kilometerstand nach dem ersten Kilometerstand,
- eine Vergleichseinheit zum Durchführen eines Vergleichs zwischen den aktuell gemessenen Fahrzeugdaten mit dem ersten Datensatz als auch dem zweiten Datensatz zur Bestimmung des Zustands, wobei
- die Vergleichseinheit dazu ausgebildet ist, einen Ist-Zustand anhand eines Vergleiches zwischen den aktuell gemessenen Fahrzeugdaten und dem ersten Datensatz vorzunehmen, und einen Soll-Zustand anhand eines Vergleiches zwischen den aktuell gemessenen Fahrzeugdaten und dem zweiten Datensatz vorzunehmen und ferner den aktuellen Verschleiß der Komponenten des Fahrwerkes anhand eines Soll-Ist-Vergleiches zu bestimmen.

Die Vorteile des Verfahrens können auch auf das Fahrzeugsystem übertragen werden.

Das Sensorsystem kann aus mehreren verschiedenen Sensoren und aus verschiedenen Sensortypen bestehen.

Die Vergleichseinheit kann als Prozessor ausgebildet sein.

In weiterer Ausgestaltung ist das Sensorsystem zum Erfassen der Straßenoberfläche ausgebildet. Ferner ist vorzugsweise ein Prozessor vorgesehen, zur Erzeugung des zweiten Datensatzes, durch Unterteilen der als Sollzustand erfassten Fahrzeugdaten in einem die Straßenoberfläche repräsentierenden Straßenoberflächencluster oder Anlegen eines neuen Straßenoberflächenclusters bei bislang unbekannter Straßenoberfläche und Unterteilen der als Sollzustand erfassten Fahrzeugdaten zu dem neu angelegten Straßenoberflächencluster und Speichern des zweiten Datensatzes in der Speichereinheit. Der Prozessor ist dazu zur Kommunikation mit dem Sensorsystem und der Speichereinheit verbunden. Ferner können Prozessor und Vergleichseinheit und Speichereinheit auch als ein Modul ausgebildet sein.

In weiterer Ausgestaltung ist die Vergleichseinheit dazu ausgebildet, einen Ist-Zustand anhand eines Vergleiches zwischen den aktuell gemessenen Fahrzeugdaten und dem ersten Datensatz vorzunehmen, und einen Soll-Zustand anhand eines Vergleiches zwischen den aktuell gemessenen Fahrzeugdaten und dem zweiten Datensatz vorzunehmen und ferner den aktuellen Verschleiß der Komponenten des Fahrwerkes anhand eines Soll-Ist-Vergleiches zu bestimmen.

In weiterer Ausgestaltung ist das Sensorsystem dazu ausgebildet, die aktuellen Fahrzeugdaten kontinuierlich oder adaptiv zu messen.

Zudem können die aktuell gemessenen Fahrzeugdaten die gefahrenen Kilometer und/oder das Alter des Fahrzeugs umfassen.

Ferner wird die Aufgabe gelöst durch ein Fahrzeug mit einem wie oben beschriebenen Fahrzeugsystem.

Weitere Eigenschaften und Vorteile der vorliegenden Erfindung ergeben sich aus der nachfolgenden Beschreibung unter Bezugnahme auf die beiliegenden Figuren. Darin zeigen schematisch:
FIG 1: eine Ausgestaltung eines erfindungsgemäßen Verfahrens, und
FIG 2: eine Auswertung im Frequenzbereich eines Querlenkers über einen Lebensdauerabschnitt, und
FIG 3: ein erfindungsgemäßes Fahrzeugsystem.

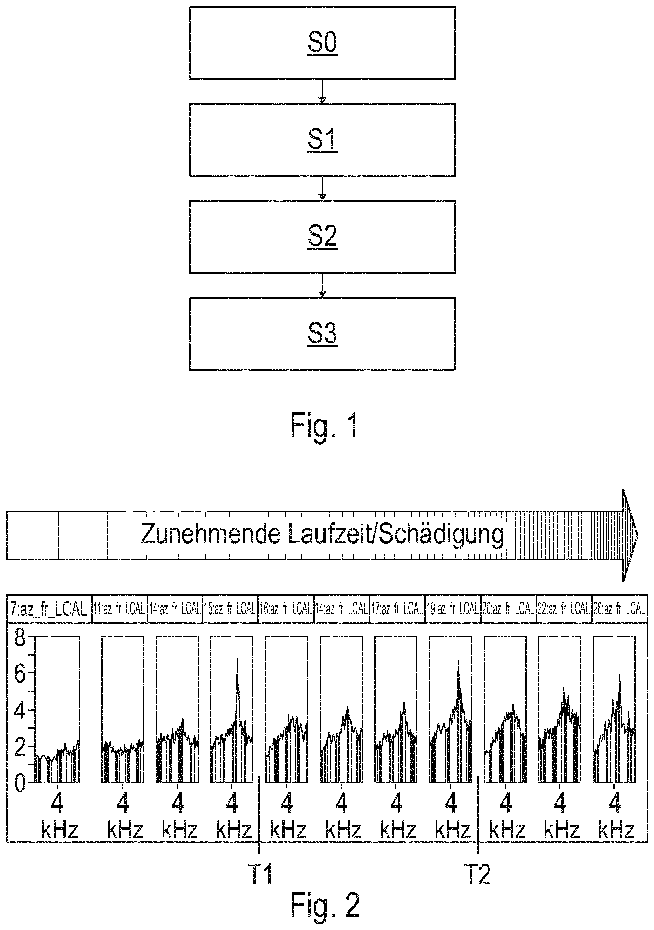

FIG 1 zeigt eine Ausgestaltung eines erfindungsgemäßen Verfahrens zum Bestimmen eines Zustands der Komponenten eines individuellen Fahrwerks eines individuellen Fahrzeugs.

Dabei wird in einem Vorschritt S0 zunächst ein erster Datensatz erzeugt. Dieser wird anhand eines identischen oder ähnlichen Fahrwerks erzeugt, welches im individuellen Fahrzeug verbaut ist. Dieser erste Datensatz wird durch einen durchgeführten Langläufertest auf einem Prüffeld erzeugt und spiegelt den Lebensdauerzyklus des Fahrwerks vom Neuzustand bis zum Vollverschleiß des Fahrwerks wieder. Durch den im Prüffeld durchgeführten Langläufertest können bestimmte Schwingungen und Frequenzen (Frequenzbereiche) erkannt werden, welche jeweils zu einem bestimmten Zustand des Fahrwerks gehören. So entsteht beim Bremsen bei bereits vorhandenem Verschleiß ein lauteres Quitschgeräusch.

Es ist durch diesen Langläufertest einfach möglich, bestimmte Frequenzbereiche zu identifizieren, d.h. beispielsweise Footprints zu erzeugen, die für einen späteren Vergleich herangezogen werden können. Der erste Datensatz kann dabei durch eine rein analytische Vorgehensweise oder auch durch ein künstliches neuronales Netz oder ein anderes maschinelles Lernverfahren erzeugt werden.

Durch einen Austausch können jedoch verschleißbehaftete Bauteilkomponenten auf dem Prüffeld ausgetauscht werden. Dieser Austausch wird mitsamt den danach erzeugten ersten Datensatz, vor allem den Schwingungen und Frequenzen gespeichert. Dadurch kann der erste Datensatz erweitert bzw. vervollständigt werden. Der erste Datensatz weist somit Informationen über neue Bauteilkomponenten, verschlissene, sowie verschlissene und "noch haltbare" Komponenten auf und spiegelt somit umfangreich die Frequenzen / Schwingungen und Belastungsdaten über die gesamte Lebensdauer des Fahrwerks wieder. Der so erzeugte erste Datensatz kann bei einem späteren Vergleich mit dem aktuellen Fahrwerkszustand durch die gemessenen Fahrzeugdaten des individuellen Fahrzeugs zur genaueren Bestimmung des Zustandes des tatsächlichen Fahrwerks im individuellen Fahrzeug beitragen.

Das Erzeugen des ersten Datensatzes auf einem Prüfstand bietet ferner den Vorteil, dass Bauteilkomponenten gezielt und wissentlich getauscht werden können. So können beispielsweise Bremsbeläge regelmäßig getauscht werden, welche anschließend mit den bereits älteren, zum Teil verschlissenen umliegenden Bauteilkomponenten andere Schwingungen/Frequenzen erzeugen. Dadurch kann der erste Datensatz erweitert als auch verbessert werden. Dieser erste Datensatz stellt im Wesentlichen einen generischen Datensatz dar.

Somit können vereinfacht generische Daten kostengünstig erzeugt werden.

Durch Erzeugen eines solchen ersten Datensatzes kann zudem die Sicherheit beim Erstellen/Einfahren des zweiten Datensatzes gewährleistet werden, indem beispielsweise der erste Datensatz zur Plausibilität herangezogen wird.

FIG 2 zeigt eine Auswertung im Frequenzbereich eines Querlenkers über einen Lebensdauerabschnitt. Dabei reicht das Frequenzspektrum von 3,5 bis 4,5 Hz am Querlenker.

Dabei ist zunächst ein Anstieg um 86% der Frequenz und eine zunehmende Schädigung zu beobachten. Nach einem Tausch der Zugstrebe bei etwa 100.000 km, Zeitpunkt T1, ergibt sich ein Abfall der Frequenz um etwa 9%. Bei weiterer Laufzeit ergibt sich ein weiterer Anstieg um 28% der Frequenz. Dieser wird um ca. 24% reduziert, bei einem Motorhydrolageraustausch bei ca. 200.000km Laufleistung bei einem Zeitpunkt T2. Im Laufe des Lebensdauerzyklus ergibt sich eine ernstzunehmende Schädigung und ein weiterer Anstieg der ermittelten Frequenz um 15 %.

Durch eine Erstellung eines generischen Datensatzes auf dem Prüfstand können für jede Achse individuelle Footprints, d.h. Frequenzprofile für das jeweilige Fahrwerk erstellt werden, die zum Vergleich herangezogen werden können.

Die Erstellung des ersten Datensatzes auf dem Prüfstand bietet hier den Vorteil, dass ein Austausch verschiedener Komponenten genau bekannt ist und ferner besser bestimmt werden kann, wie die Frequenzbereiche darauf reagieren. Dabei kann zudem beispielsweise erkannt werden, wie sensibel die Frequenzen / Schwingungen bei den Ausfall unterschiedlicher Bauteile reagieren.

Ferner kann durch eine solche Erstellung eines ersten Datensatzes einfach ein gesamter Lebensdauerzyklus eines Fahrwerks kostengünstig abgedeckt werden.

Dieser erste Datensatz wird nun in ein individuelles Fahrzeug mit identischen oder ähnlichen Fahrwerk integriert.

In einem ersten Schritt S1 wird ein individueller zweiter Datensatz in einem individuellen Fahrzeug durch Erfassung der Fahrzeugdaten als Sollzustand bis zu einem vorab definierten ersten Kilometerstand und/oder einem festgelegten Alter des individuellen Fahrzeugs erzeugt. Dadurch wird dem Rechnung getragen, dass jedes/viele Fahrzeuge eine individuelle Ausstattung /Eigenschaft besitzen, welche individuelle Schwingungen/Frequenzen erzeugen.

Dadurch ist ein individueller Anlernvorgang auf Grund unterschiedlicher Ausstattungsvarianten gewährleistet.

Fährt das Fahrzeug vom Band, wird somit ein Anlernen des Soll-Zustandes vorgenommen, um den zweiten Datensatz zu erzeugen. Dieser Anlernvorgang bleibt für eine gewisse Zeit oder bestimmte gefahrene Kilometer aktiv.

Um einen möglichst repräsentativen zweiten Datensatz zu erzeugen, wird die Straßenoberfläche durch ein Sensorsystem erfasst, erkannt und in Cluster eingeteilt. Das Sensorsystem kann aus Kameras, Radar etc. Sensoren bestehen und ferner auch Informationen aus dem Navigationssystem umfassen. So können beispielsweise Schotterwege, Teeroberflächen, neue und ältere Straßenbeläge unterteilt werden. Vorzugsweise können diese noch nach Wetterlage weiter unterteilt werden.

Werden beim Anlernvorgang neue Schwingungen/ Frequenzen erfasst, so werden sie beim Anlernvorgang einem dieser Cluster zum späteren Vergleich zugeordnet. Ist noch kein Cluster, welches die Straßenoberfläche repräsentiert, vorhanden, so wird beispielsweise durch einen Prozessor ein neues Cluster angelegt.

Dadurch kann ein verbesserter zweiter Datensatz angelernt werden und später somit der Zustand des Fahrwerks genauer ermittelt werden.

In einem zweiten Schritt S2 werden durch Sensoren aktuelle Fahrzeugdaten, d.h. Schwingungen und Frequenzen erfasst. Diese Sensoren können beispielsweise Beschleunigungssensoren sein. Die aktuellen Fahrzeugdaten werden ab einem vorab definierten zweiten Kilometerstand und/oder ab einem festgelegten Alter des individuellen Fahrzeugs erfasst. Dabei liegt das Alter und der zweite Kilometerstand nach dem ersten Kilometerstand.

Die Erfassung der aktuellen Fahrzeugdaten kann kontinuierlich oder adaptiv durch das Fahrzeug erfolgen.

In einem dritten Schritt S3 wird ein Vergleich der aktuell gemessenen Fahrzeugdaten mit dem ersten Datensatz als auch dem zweiten Datensatz vorgenommen.

Dabei kann quasi durch den Vergleich der aktuellen Fahrzeugdaten mit dem ersten Datensatz der Ist-Zustand bestimmt werden. Die aktuellen Fahrzeugdaten werden mit dem ersten Datensatz verglichen, wodurch der Verschleiß bestimmt werden kann. Es wird quasi durch den Vergleich ermittelt, in welchem Ist-Zustand sich die Fahrzeugkomponenten befinden.

Der Vergleich zwischen den aktuellen Fahrzeugdaten und dem zweiten Datensatz entspricht einem Vergleich zwischen dem aktuellen Zustand und dem Soll-(Neuen)Zustand. Es wird quasi die Differenz zum Neuzustand bestimmt und ein Soll-Zustand anhand eines Vergleiches zwischen den aktuell gemessenen Fahrzeugdaten und dem zweiten Datensatz vorgenommen.

Der aktuelle Verschleiß der Komponenten des Fahrwerkes wird anhand eines Soll-Ist-Vergleiches bestimmt.

Somit kann ein Soll-Ist-Vergleich bewerkstelligt werden, um eine Aussage über den Zustand des Fahrwerks zu erhalten. Es wird sowohl zum Neuzustand als auch beispielsweise hier zum Endzustand (Vollverschlissen) oder Lebensdauerzustand verglichen. So kann beispielsweise ein Ergebnis lauten "zu 80% vollverschlissen" oder zu "20% dem Neuzustand entsprechend".

Ferner können die Datensätze unterschiedlich gewichtet werden. Bei einem neueren Fahrzeug kann beispielsweise der Vergleich mit dem zweiten Datensatz stärker in das Endergebnis eingebracht werden, als bei einem älteren Fahrzeug.

Zusätzlich können zudem Parameter wie die gefahrenen Kilometer oder das gesamte Alter des Fahrzeuges, zur Überprüfung der Plausibilität herangezogen werden. Die gefahrenen Kilometer können repräsentativ für gemittelte Lastkollektive genutzt werden und das Alter für die Alterung von z.B. Gummilager.

Durch das erfindungsgemäße Verfahren kann eine eindeutige und sichere Beurteilung des Zustands eines Fahrwerks erfolgen. Damit kann die Fahrsicherheit erhöht werden, oder verschlissene Bauteilkomponenten rechtzeitig ausgetauscht werden.

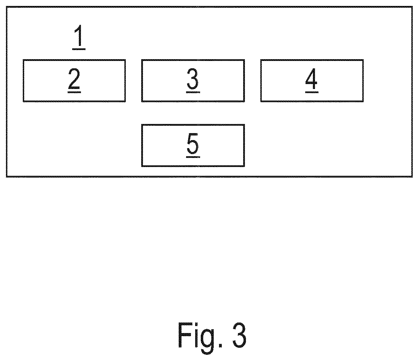

FIG 3 zeigt das erfindungsgemäße Fahrzeugsystem 1 zum Bestimmen eines Zustands der Komponenten eines individuellen Fahrwerks eines individuellen Fahrzeugs schematisch.

Das Fahrzeugsystem 1 umfasst eine Speichereinheit 2 zum Bereitstellen des Datensatzes von Fahrzeugdaten, wobei der erste Datensatz die Belastungs- und /oder Verschleißdaten eines gleichen oder ähnlichen Fahrwerktyps des individuellen Fahrzeuges über die gesamte Lebensdauer wiedergibt. Dieser erste Datensatz wird vorzugsweise auf dem Prüffeld in einem Langläufertest kostengünstig erzeugt.

Die Speichereinheit 2 kann beispielsweise in einem Steuergerät integriert sein.

In der Speichereinheit 2 ist durch ein Sensorsystem 3 ein individueller zweiter Datensatz gespeichert. Dieser wurde durch das Sensorsystem 3 des Fahrzeugs selber erzeugt. Dabei wird der individuelle zweite Datensatz bis zu einem vorab definierten ersten Kilometerstand und/oder einem festgelegten Alter des Fahrzeugs erzeugt und wird als Sollzustand festgelegt. Der zweite Datensatz ist dabei, abhängig von der jeweiligen Straßenoberfläche in mehrere Cluster unterteilt, welche die jeweilige Straßenoberfläche widerspiegelt.

Mit demselben Sensorsystem 3 können aktuelle Fahrzeugdaten erfasst bzw. gemessen werden. Diese können kontinuierlich oder adaptiv gemessen werden. Fahrzeugdaten umfassen dabei im allgemeinen Schwingungen und deren Frequenzen. Diese können beispielsweise durch Beschleunigungssensoren erfasst werden.

In einer Vergleichseinheit 4 kann anhand des ersten und zweiten Datensatzes ein Soll-Ist-Vergleich bewerkstelligt werden. Die Vergleichseinheit 4 kann dabei als Prozessor ausgebildet sein. Der Prozessor kann ebenfalls in dem Steuergerät integriert sein.

Ferner kann eine Ausgabeeinheit 5 vorgesehen sein. Diese kann beispielsweise ein Display oder eine Cockpitanzeige sein. Bei Festlegen eines Soll-Ist-Vergleichswertes über einem vorgegebenen Wert, kann die Vergleichseinheit 4 dazu ausgebildet sein, eine Warnmeldung über die Ausgabeeinheit 5 auszugeben oder einen Inspektionstermin vorzuschlagen.

### Bezugszeichen

- 1: Fahrzeugsystem
- 2: Speichereinheit
- 3: Sensorsystem
- 4: Vergleichseinheit
- 5: Ausgabeeinheit
- T1, T2: Zeitpunkt
- S0-S3: Schritte

## Patentansprüche

1. Verfahren zum Bestimmen eines Zustands der Komponenten eines individuellen Fahrwerks eines individuellen Fahrzeugs, **gekennzeichnet, durch**:
- Bereitstellen eines ersten Datensatzes von Fahrzeugdaten, welcher zumindest Belastungs- und Verschleißdaten eines gleichen oder ähnlichen Fahrwerktyps des individuellen Fahrzeuges über die gesamte Lebensdauer umfasst,
- Erzeugen eines individuellen zweiten Datensatzes in einem individuellen Fahrzeug durch Erfassung von Fahrzeugdaten als Sollzustand bis zu einem vorab definierten ersten Kilometerstand und/oder einem festgelegten Alter des individuellen Fahrzeugs,
- Erfassen von aktuell gemessenen Fahrzeugdaten ab einem vorab definierten zweiten Kilometerstand und/oder einem festgelegten Alter des individuellen Fahrzeugs, hierbei liegt das Alter und der zweite Kilometerstand nach dem ersten Kilometerstand,
- Durchführen eines Vergleichs der aktuell gemessenen Fahrzeugdaten mit dem ersten Datensatz als auch dem zweiten Datensatz zur Bestimmung des Zustands, wobei
- ein Ist-Zustand anhand eines Vergleiches zwischen den aktuell gemessenen Fahrzeugdaten und dem ersten Datensatz vorgenommen wird, und ein Soll-Zustand anhand eines Vergleiches zwischen den aktuell gemessenen Fahrzeugdaten und dem zweiten Datensatz vorgenommen wird und der aktuelle Verschleiß der Komponenten des Fahrwerkes anhand eines Soll-Ist-Vergleiches bestimmt wird.

2. Verfahren nach Anspruch 1, **dadurch gekennzeichnet, dass**
der zweite Datensatz, durch Unterteilen der als Sollzustand erfassten Fahrzeugdaten in einem die Straßenoberfläche repräsentierenden Straßenoberflächencluster oder Anlegen eines neuen Straßenoberflächenclusters bei bislang unbekannter Straßenoberfläche und Unterteilen der als Sollzustand erfassten Fahrzeugdaten in dem neu angelegten Straßenoberflächencluster erzeugt wird.

3. Verfahren nach Anspruch 1 oder 2, **dadurch gekennzeichnet, dass** der erste Datensatz durch einen auf einem Prüfstand in einem Langläufertest getesteten identischen oder ähnlichen Fahrwerktyp als generisch erzeugter Referenzdatensatz bereitgestellt wird.

4. Verfahren nach Anspruch 3, **dadurch gekennzeichnet, dass**
der Referenzdatensatz für jeden der beiden Achsen des identischen oder ähnlichen Fahrwerktyps separat erzeugt wird.

5. Verfahren nach einem der vorhergehenden Ansprüche, **dadurch gekennzeichnet, dass**
als aktuell gemessene Fahrzeugdaten sowie als zweiter Datensatz zumindest die Schwingungsamplituden der Fahrzeugbewegungen bei charakteristischen Straßenoberflächen verwendet werden.

6. Verfahren nach einem der vorhergehenden Ansprüche, **dadurch gekennzeichnet, dass**
die aktuellen Fahrzeugdaten kontinuierlich oder adaptiv durch das Fahrzeug gemessen werden.

7. Verfahren nach einem der vorhergehenden Ansprüche, **dadurch gekennzeichnet, dass**
die aktuell gemessenen Fahrzeugdaten die gefahrenen Kilometer und/oder das Alter des Fahrzeugs umfassen.

8. Fahrzeugsystem (1) zum Bestimmen eines Zustands der Komponenten eines individuellen Fahrwerks eines individuellen Fahrzeugs umfassend:
- eine Speichereinheit (2) zum Bereitstellen eines ersten Datensatzes von Fahrzeugdaten, wobei der erste Datensatz zumindest die Belastungs- und Verschleißdaten eines gleichen oder ähnlichen Fahrwerktyps des individuellen Fahrzeuges über die gesamte Lebensdauer umfasst,
- die Speichereinheit (2) zum Bereitstellen eines individuellen zweiten Datensatzes in einem individuellen Fahrzeug, wobei der individuelle zweite Datensatz gemessene Fahrzeugdaten als Sollzustand bis zu einem vorab definierten ersten Kilometerstand und/oder einem festgelegten Alter des individuellen Fahrzeugs durch ein oder mehreren Sensoren umfasst,
- ein Sensorsystem (3) zum Erfassen von aktuell gemessenen Fahrzeugdaten ab einem vorab definierten zweiten Kilometerstand und/oder einem festgelegten Alter des individuellen Fahrzeugs, hierbei liegt das Alter und der zweite Kilometerstand nach dem ersten Kilometerstand,
- eine Vergleichseinheit (4) zum Durchführen eines Vergleichs zwischen den aktuell gemessenen Fahrzeugdaten mit dem ersten Datensatz als auch dem zweiten Datensatz zur Bestimmung des Zustands, wobei
- die Vergleichseinheit (4) dazu ausgebildet ist, einen Ist-Zustand anhand eines Vergleiches zwischen den aktuell gemessenen Fahrzeugdaten und dem ersten Datensatz vorzunehmen, und einen Soll-Zustand anhand eines Vergleiches zwischen den aktuell gemessenen Fahrzeugdaten und dem zweiten Datensatz vorzunehmen und ferner den aktuellen Verschleiß der Komponenten des Fahrwerkes anhand eines Soll-Ist-Vergleiches zu bestimmen.

9. Fahrzeugsystem (1) nach Anspruch 8, **dadurch gekennzeichnet, dass**
das Sensorsystem (3) zum Erfassen der Straßenoberfläche ausgebildet ist und ferner ein Prozessor vorgesehen ist, zur Erzeugung des zweiten Datensatzes, durch Unterteilen der als Sollzustand erfassten Fahrzeugdaten in einem die Straßenoberfläche repräsentierenden Straßenoberflächencluster oder Anlegen eines neuen Straßenoberflächenclusters bei bislang unbekannter Straßenoberfläche und Unterteilen der als Sollzustand erfassten Fahrzeugdaten zu dem neu angelegten Straßenoberflächencluster und Speichern des zweiten Datensatzes in der Speichereinheit (2).

10. Fahrzeugsystem (1) nach einem der vorhergehenden Ansprüche 8 bis 9, **dadurch gekennzeichnet, dass**
das Sensorsystem (3) dazu ausgebildet ist, die aktuellen Fahrzeugdaten kontinuierlich oder adaptiv zu messen.

11. Fahrzeugsystem (1) nach einem der vorhergehenden Ansprüche 8 bis 10,
**dadurch gekennzeichnet, dass**
die aktuell gemessenen Fahrzeugdaten die gefahrenen Kilometer und/oder das Alter des Fahrzeugs umfassen.

12. Fahrzeug mit einem Fahrzeugsystem (1) nach einem der vorhergehenden Ansprüche 8 bis 11.

## Claims

1. Method for determining a condition of the components of an individual chassis of an individual vehicle, **characterized by**:
- providing a first data set of vehicle data which comprises at least load and wear data relating to an identical or similar chassis type of the individual vehicle over the entire service life,
- generating an individual second data set in an individual vehicle by capturing vehicle data as a target condition up to a predefined first mileage and/or a defined age of the individual vehicle,
- capturing currently measured vehicle data from a predefined second mileage and/or a defined age of the individual vehicle, where the age and the second mileage are after the first mileage,
- performing a comparison of the currently measured vehicle data with the first data set and the second data set in order to determine the condition, wherein
- an actual condition is effected on the basis of a comparison between the currently measured vehicle data and the first data set, and a target condition is effected on the basis of a comparison between the currently measured vehicle data and the second data set, and the current wear of the components of the chassis is determined on the basis of a target/actual comparison.

2. Method according to Claim 1, **characterized in that** the second data set is generated by subdividing the vehicle data captured as a target condition in a road surface cluster representing the road surface or by creating a new road surface cluster for a previously unknown road surface and subdividing the vehicle data captured as a target condition in the newly created road surface cluster.

3. Method according to Claim 1 or 2, **characterized in that** the first data set is provided as a generically generated reference data set by way of an identical or similar chassis type tested on a test bench in a long-distance endurance test.

4. Method according to Claim 3, **characterized in that** the reference data set is generated separately for each of the two axles of the identical or similar chassis type.

5. Method according to one of the preceding claims,
**characterized in that**
at least the vibration amplitudes of the vehicle movements on characteristic road surfaces are used as currently measured vehicle data and as a second data set.

6. Method according to one of the preceding claims,
**characterized in that**
the current vehicle data are measured continuously or adaptively by the vehicle.

7. Method according to one of the preceding claims,
**characterized in that**
the currently measured vehicle data include the kilometres driven and/or the age of the vehicle.

8. Vehicle system (1) for determining a condition of the components of an individual chassis of an individual vehicle, comprising:
- a storage unit (2) for providing a first data set of vehicle data, wherein the first data set comprises at least the load and wear data relating to an identical or similar chassis type of the individual vehicle over the entire service life,
- the storage unit (2) for providing an individual second data set in an individual vehicle, wherein the individual second data set comprises measured vehicle data as a target condition up to a predefined first mileage and/or a defined age of the individual vehicle, by way of one or more sensors,
- a sensor system (3) for capturing currently measured vehicle data from a predefined second mileage and/or a defined age of the individual vehicle, where the age and the second mileage are after the first mileage,
- a comparison unit (4) for performing a comparison of the currently measured vehicle data with the first data set and the second data set in order to determine the condition, wherein
- the comparison unit (4) is designed to effect an actual condition on the basis of a comparison between the currently measured vehicle data and the first data set, and to effect a target condition on the basis of a comparison between the currently measured vehicle data and the second data set, and also to determine the current wear of the components of the chassis on the basis of a target/actual comparison.

9. Vehicle system (1) according to Claim 8,
**characterized in that**
the sensor system (3) is designed to capture the road surface, and a processor is also provided for generating the second data set by subdividing the vehicle data captured as a target condition in a road surface cluster representing the road surface or by creating a new road surface cluster for a previously unknown road surface and subdividing the vehicle data captured as a target condition to form the newly created road surface cluster and storing the second data set in the storage unit (2).

10. Vehicle system (1) according to one of the preceding Claims 8 to 9, **characterized in that**
the sensor system (3) is designed to measure the current vehicle data continuously or adaptively.

11. Vehicle system (1) according to one of the preceding Claims 8 to 10, **characterized in that**
the currently measured vehicle data include the kilometres driven and/or the age of the vehicle.

12. Vehicle having a vehicle system (1) according to one of the preceding Claims 8 to 11.

## Revendications

1. Procédé de détermination de l'état des composants d'un châssis individuel d'un véhicule individuel, **caractérisé par** :
- la fourniture d'un premier ensemble de données constitué de données de véhicule, lequel comprend au moins des données de charge et d'usure d'un type de châssis identique ou semblable à celui du véhicule individuel sur l'ensemble de sa durée de vie,
- la génération d'un deuxième ensemble de données individuel dans un véhicule individuel par acquisition de données de véhicule en tant qu'état cible jusqu'à un premier kilométrage prédéfini et/ou un âge défini du véhicule individuel,
- l'acquisition de données de véhicule actuellement mesurées à partir d'un deuxième kilométrage prédéfini et/ou d'un âge défini du véhicule individuel, l'âge et le deuxième kilométrage étant postérieurs au premier kilométrage,
- la réalisation d'une comparaison des données de véhicule actuellement mesurées avec le premier ensemble de données ainsi qu'avec le deuxième ensemble de données pour déterminer l'état, dans lequel
- un état réel est établi à l'aide d'une comparaison entre les données de véhicule actuellement mesurées et le premier ensemble de données, et un état cible est établi à l'aide d'une comparaison entre les données de véhicule actuellement mesurées et le deuxième ensemble de données, et l'usure actuelle des composants du châssis est déterminée à l'aide d'une comparaison cible-réel.

2. Procédé selon la revendication 1, **caractérisé en ce que**
le deuxième ensemble de données est généré en subdivisant les données de véhicule acquises en tant qu'état cible dans un groupement de surfaces routières représentant la surface routière, ou en créant un nouveau groupement de surfaces routières en cas de surface routière jusqu'alors inconnue et en subdivisant les données de véhicule acquises en tant qu'état cible dans le groupement de surfaces routières nouvellement créé.

3. Procédé selon la revendication 1 ou 2, **caractérisé en ce que** le premier ensemble de données est fourni en tant qu'ensemble de données de référence généré de manière générique, à partir d'un type de châssis identique ou semblable testé sur un banc d'essai dans le cadre d'un test d'endurance.

4. Procédé selon la revendication 3, **caractérisé en ce que**
l'ensemble de données de référence est généré séparément pour chacun des deux essieux du type de châssis identique ou semblable.

5. Procédé selon l'une des revendications précédentes,
**caractérisé en ce que**
au moins les amplitudes de vibration des mouvements du véhicule sur des surfaces routières caractéristiques sont utilisées en tant que données de véhicule actuellement mesurées ainsi qu'en tant que deuxième ensemble de données.

6. Procédé selon l'une des revendications précédentes,
**caractérisé en ce que**
les données de véhicule actuelles sont mesurées en continu ou de manière adaptative par le véhicule.

7. Procédé selon l'une des revendications précédentes,
**caractérisé en ce que**
les données de véhicule actuellement mesurées comprennent le kilométrage parcouru et/ou l'âge du véhicule.

8. Système de véhicule (1) pour déterminer un état des composants d'un châssis individuel d'un véhicule individuel, comprenant :
- une unité de mémoire (2) pour la fourniture d'un premier ensemble de données de véhicule, le premier ensemble de données comprenant au moins des données de charge et d'usure d'un type de châssis identique ou semblable à celui du véhicule individuel sur l'ensemble de sa durée de vie,
- l'unité de mémoire (2) destinée à fournir un deuxième ensemble de données individuel dans un véhicule individuel, le deuxième ensemble de données individuel comprenant des données de véhicule mesurées en tant qu'état cible jusqu'à un premier kilométrage prédéfini et/ou un âge défini du véhicule individuel par un ou plusieurs capteurs,
- un système de capteurs (3) pour l'acquisition de données de véhicule actuellement mesurées à partir d'un deuxième kilométrage prédéfini et/ou d'un âge défini du véhicule individuel, l'âge et le deuxième kilométrage étant postérieurs au premier kilométrage,
- une unité de comparaison (4) pour la réalisation d'une comparaison des données de véhicule actuellement mesurées avec le premier ensemble de données ainsi qu'avec le deuxième ensemble de données pour déterminer l'état, dans lequel
- l'unité de comparaison (4) est conçue pour établir un état réel à l'aide d'une comparaison entre les données de véhicule actuellement mesurées et le premier ensemble de données, et pour établir un état cible à l'aide d'une comparaison entre les données de véhicule actuellement mesurées et le deuxième ensemble de données, et pour déterminer en outre l'usure actuelle des composants du châssis à l'aide d'une comparaison cible-réel.

9. Système de véhicule (1) selon la revendication 8,
**caractérisé en ce que**
le système de capteurs (3) est conçu pour détecter la surface routière et un processeur est en outre prévu pour générer le deuxième ensemble de données, en subdivisant les données de véhicule acquises en tant qu'état cible dans un groupement de surfaces routières représentant la surface routière, ou en créant un nouveau groupement de surfaces routières en cas de surface routière jusqu'alors inconnue, en subdivisant les données de véhicule acquises en tant qu'état cible dans le groupement de surfaces routières nouvellement créé et en mémorisant le deuxième ensemble de données dans l'unité de mémoire (2).

10. Système de véhicule (1) selon l'une des revendications 8 à 9 précédentes, **caractérisé en ce que** le système de capteurs (3) est conçu pour mesurer les données de véhicule actuelles en continu ou de manière adaptative.

11. Système de véhicule (1) selon l'une des revendications 8 à 10 précédentes, **caractérisé en ce que** les données de véhicule actuellement mesurées comprennent le kilométrage parcouru et/ou l'âge du véhicule.

12. Véhicule comprenant un système de véhicule (1) selon l'une des revendications 8 à 11 précédentes.
